# EUROPEAN PATENT APPLICATION

(11) **EP 4 632 221 A1**
(43) Date of publication of application: **15.10.2025**
(21) Application number: 24382377.0
(22) Date of filing: 11.04.2024
(51) Int. Cl.: F03D 13/10, F03D 13/20

(54) **ASSEMBLY AID AND METHOD FOR ASSEMBLY OF TOWER SEGMENTS OF A WIND TURBINE TOWER**

(71) Applicant: Siemens Gamesa Renewable Energy Innovation & Technology S.L., 31621 Sarriguren (Navarra) (ES)
(72) Inventor: Barquero Perez De Albeniz, Oscar, 31180 ZIZUR MAYOR (ES); Señas Perez, Vicente, 31610 VILLAVA (ES); Urtaran Gil, Unai, 01005 VITORIA-GASTEIZ (ES)
(74) Representative: SGRE-Association

(57) **Abstract**

The invention relates to an assembly aid (1) for securely placing a fixation bolt (2) for fixing two tower segments (3) of a tower of a wind turbine. The assembly aid (1) comprises a mast (4) for being arranged vertically and parallel aside the fixation bolt (2), a lifting shoe (5) for being moved under a bolt head (6) of the fixation bolt (2), a lifting mechanism (7) for lifting the lifting shoe (5) with respect to the mast (4) and an actuator (8) for operating the lifting mechanism (7). The invention further relates to a method for assembling two tower segments (3) of a wind turbine tower.

## Description

The present invention relates to an assembly aid for securely placing a fixation bolt for fixing two tower segments of a tower of a wind turbine. The invention also relates to a method for assembling two tower segments of a wind turbine tower.

It is known that wind turbine towers usually comprise a plurality of tower segments, successively assembled together by a plurality fixation bolts. According to a common assembly method, two tower segments are stacked in a way that fixation holes of the tower segments are aligned in pairs. In each fixation hole of the lower tower segment, a threaded part of a fixation bolt is arranged, wherein bolt heads of the fixation bolts are held horizontally in place by a horizontal support device, e.g., a support ring, attached to the lower tower segment.

In this state, a worker has to lift a fixation bolt up until the threaded portion protrudes out of a fixation hole of the upper tower segment, arrange a washer and a fixation nut at the threaded portion of the fixation bolt and tighten the fixation nut. After that, the procedure is repeated with another fixation bolt until all fixation bolts are fixed to the two tower segments.

Since the size for wind turbine towers has been increased over the last decades, the size of the fixation bolts has increased as well. Standard fixation bolts for such applications are M64, M72 or even higher fixation bolts. The weight of such fixation bolts can be higher than 15 kg or even 20 kg. This makes the assembly procedure of the fixation bolts for the workers very cumbersome, since the bolts have to be manually raised into the fixation holes of the upper tower segment. As a result, an ergonomic damage on health of the worker can occur.

It is therefore the object of the present invention to eliminate or at least partially eliminate the disadvantages described above in the case of an assembly process of a wind turbine tower. In particular, it is the object of the present invention to create a device and a method for assembling a wind turbine tower, which reduce the risk of injuries to the workers in a simple and inexpensive manner.

The above object is achieved by the claims. Accordingly, the problem is solved by an assembly aid for securely placing a fixation bolt for fixing two tower segments of a tower of a wind turbine with the features of the independent claim 1 and by a method for assembling two tower segments of a wind turbine tower with the features of the subordinate claim 13. Further features and details of the invention emerge from the subclaims, the description and the drawings. Features and details that are described in connection with the assembly aid according to the invention naturally also apply in connection with the method according to the invention and vice versa, so that with regard to the disclosure of the individual aspects of the invention, reference is or can always be made to each other.

According to a first aspect of the invention, the object is achieved by an assembly aid for securely placing a fixation bolt for fixing two tower segments of a tower of a wind turbine. The assembly aid comprises a mast for being arranged vertically and parallel aside the fixation bolt, a lifting shoe for being moved under a bolt head of the fixation bolt, a lifting mechanism for lifting the lifting shoe with respect to the mast and an actuator for operating the lifting mechanism.

Preferably, the mast is configured as a metal hollow tube, e.g., with a rectangular or square cross-section. It is preferred that longitudinal edges of the mast comprise a roundness. Further preferred, the mast comprises a rustproof material, such as stainless steel and/or a rust protection surface. Preferably, the surface of the mast is friction reduced in order to improve a relative movement of the lifting shoe to the mast. A main function of the mast is to provide a vertical guide for the lifting shoe and to support a vertical movement of the lifting shoe. Moreover, the mast provides an engagement device for the worker to secure the assembly aid during operation. The mast is preferably configured for being arranged inside the wind turbine segments aside the fixation bolt to be placed.

The lifting shoe is arranged at the mast in a way that a vertical relative movement of the lifting shoe to the mast is provided. Preferably, a horizontal relative movement of the lifting shoe to the mast is at least restricted, e.g., by the lifting mechanism. The lifting shoe comprises an upper side for engaging with the bolt head of the fixation bolt. Preferably, an upper surface of the lifting shoe comprises a friction reduced surface for improved gliding of the bolt head on the lifting shoe when the lifting shoe is moved in a horizontal direction under the bolt head. Preferably, the upper surface of the lifting shoe is configured for allowing a relative rotation of the fixation bolt about a longitudinal axis of the fixation bolt with respect to the lifting shoe. The lifting shoe is configured for withstanding at least the weight of the fixation bolt.

The lifting mechanism is configured for moving the lifting shoe in a vertical direction upwards relatively to the mast. The lifting mechanism is configured for lifting at least the weight of the lifting shoe together with the fixation bolt. The lifting mechanism can be any conventional lifting mechanism, e.g., with an electromotor, a piston drive, a bass screw drive, a gear drive, a toothed rack or the like. Alternatively, the lifting mechanism can be configured as a manual lifting mechanism, e.g., a pulley tackle or the like.

The actuator is configured for operating the lifting mechanism. For an automatic driven lifting mechanism, the actuator can be configured as a switch, control device or the like. For a manually driven lifting mechanism, the actuator can be configured as a force transmission device, e.g., a lever, a handle, a wheel, a pedal or the like.

Preferably, the assembly aid has a weight less than 30 kg. Thus, the worker can easily arrange the assembly aid at the position next to the fixation bolt and move the assembly aid towards the fixation bolt in a way that the lifting shoe moves directly under the bolt head. In this position, by operating the actuator, the lifting shoe can be moved upwards and thereby lifting the fixation bolt upwards as well.

An assembly aid according to the invention has the advantage over conventional assembly methods without assembly aids that in a simple and inexpensive way, the fixation bold can be moved from a preassembly position, in which the fixation bolt is disengaged from the fixation hole of the upper tower segment, into an assembly position, in which a threaded end portion of the fixation bolt protrudes out of the fixation hole of the upper tower segment for engaging a respective washer and fixation nut. Thus, the worker does not have to lift and hold the fixation bolt directly and the risk for injuries to the worker is reduced.

According to a preferred further development of the invention, an assembly aid can provide that the lifting shoe is linearly guided at the mast. Preferably, the mast is encompassed by the lifting shoe. The lifting shoe can comprise two brackets, arranged at opposite sides of the mast and at least two rollers, arranged in between the brackets at opposite sides of the mast. Preferably, a distance between the rollers equals a width of the mast. The rollers can have a cylindrical shape. Preferably, the rollers have a smooth surface. Further preferred, the rollers have soft surface for providing a smooth movement of the lifting shoe. The rollers can comprise a metal, polyhexamethylene adipamide or the like. Inside the rollers, a ball bearing can be arranged. Preferably, in order to prevent a relative tilt movement of the lifting shoe to the mast, at least two rollers are provided on each opposite side of the mast between the brackets. This has the advantage that in a simple and inexpensive way, a secure lifting operation of the fixation bolt is improved.

It is preferred, according to the invention, that the actuator is configured as a foot pedal, wherein the lifting mechanism comprises a pulley and a flexible traction device, wherein the lifting shoe is mechanically coupled to the foot pedal by the flexible traction device, wherein the flexible traction device is wound around the pulley. Preferably, the lifting shoe and the foot pedal protrude in opposite directions away from the mast. Further preferred, the lifting shoe and the foot pedal are arranged at the mast such that, in an initial position, when the assembly aid is configured for being arranged aside the fixation bolt, the lifting shoe is located vertically above the foot pedal. Preferably, for all possible relative positions of the lifting shoe, the lifting shoe is vertically above the foot pedal. The traction device can be configured as a rope, wire rope, chain or the like. Preferably, the pulley is rotatably arranged at an upper end section of the mast, e.g., between two holding brackets. Preferably, the traction device is attached to the foot pedal such that the traction device contacts rollers of the lifting shoe. Thus, a horizontal guidance of the traction device can be improved. Alternatively, the lifting shoe comprises an eye screw, wherein the traction device is guided through the eye of the eye screw. Preferably, an upper side of the foot pedal comprises an anti-slip surface, e.g., a roughening, a sawtooth structure or the like. This has the advantage that in a simple and inexpensive way, the lifting action of the lifting shoe can be provided.

More preferred, the foot pedal is linearly guided at the mast. Preferably, the mast is encompassed by the foot pedal. The foot pedal can comprise two brackets, arranged at opposite sides of the mast and at least two rollers, arranged in between the brackets at opposite sides of the mast. Preferably, a distance between the rollers equals a width of the mast. The rollers can have a cylindrical shape. Preferably, the rollers have a smooth surface. Further preferred, the rollers have soft surface for providing a smooth movement of the foot pedal. The rollers can comprise a metal, polyhexamethylene adipamide or the like. Inside the rollers, a ball bearing can be arranged. Preferably, in order to prevent a relative tilt movement of the foot pedal to the mast, at least two rollers are provided on each opposite side of the mast between the brackets. This has the advantage that in a simple and inexpensive way, a secure lifting operation of the fixation bolt is further improved.

In a particularly preferred embodiment of the invention, the mast comprises a stop element for limiting a relative movement of the foot pedal in a direction towards the pulley and/or for limiting a relative movement of the lifting shoe in a direction away from the pulley. The stop element can be provided by a bolt, arranged inside a horizontal through hole of the mast. The bolt can be secured to the mast by a nut. The stop element may comprise a dampening element for providing a smooth operation, e.g., when the lifting shoe is roughly moving down. This has the advantage that in a simple and inexpensive way, a secure lifting operation of the fixation bolt is further improved.

Preferably, the mast comprises a main mast section and a fixable telescopic end section, wherein the pulley is arranged at the telescopic end section, and wherein the foot pedal is arranged at the main mast section. The telescopic end section is arranged at an upper end of the mast. By these means, a relative position of the pulley to the mast main section can be adjusted. Thus, an initial vertical position of the lifting shoe can be adjusted, e.g., to correspond to the initial vertical position of the fixation bolt. Preferably, the telescopic end section comprises a fixation device for fixing a relative vertical position of the pulley to the main mast section. The fixation device can be configured as a fixation screw with a fixation nut, a safety pin, e.g., with an additional fall protection, a hook, a carabiner or the like. Preferably, the mast comprises a plurality of through holes to provide for the possibility to fix the telescopic end section in a plurality of different relative positions with respect to the main mast section. Alternatively, the mast can comprise a brake mechanism for fixing a relative position of the pulley to the main mast section. This has the advantage that in a simple and inexpensive way, an adjustment of the assembly aid to different initial vertical bolt position is provided. Thus, the operational area of the assembly aid is increased.

According to a preferred embodiment of the invention, the lifting shoe comprises a horizontally protruding, inclined engagement section for engaging with the bolt head. Preferably, the inclined engagement section covers a tip area of the lifting shoe. The inclined engagement section can be on an upper side and/or lower side of the lifting shoe. Thus, by moving the assembly aid with the lifting shoe in a horizontal direction towards the fixation bolt, a part of the lifting shoe can easily move between the bolt head and the horizontal support device, preventing the fixation bolt from falling down. This has the advantage that in a simple and inexpensive way, the secure and ergonomic handling of the assembly aid is further improved.

Particularly preferred, the mast comprises a handle for manually supporting the mast. Preferably, the handle has a u-shape, wherein flanks of the handle are attached to side surfaces of the mast, e.g., the main mast section. Further preferred, the mast comprises two handles, protruding from opposite sides of the mast, e.g., the main mast section.

Further preferred, both handles have a u-shape, wherein flanks of the handles are attached to opposite side surfaces of the mast. Preferably, the handle is arranged at a side of the mast, which is located adjacent to a side of the mast where the lifting mechanism is located, e.g., a traction device of the lifting mechanism. The handle is configured for the hands of the assembly worker to hold the assembly aid in place and for moving the assembly aid during the assembly procedure. This has the advantage that in a simple and inexpensive way, the secure and ergonomic handling of the assembly aid is further improved.

It is preferred according to the invention that at a bottom end of the mast a stand is arranged. Preferably, the stand is arranged at the main mast section. The stand can comprise two, three, four or more horizontal bars. Preferably, the stand is welded to the mast. Alternatively, the stand can be screwed to the mast. This has the advantage that in a simple and inexpensive way, the secure and ergonomic handling of the assembly aid is further improved.

Preferably, the lifting mechanism comprises a locking mechanism for keeping the lifting shoe at a constant height. The locking mechanism can be configured as a pawl mechanism, e.g., with a sawtooth wheel or the like. With such locking mechanism, once lifted, the fixation bolt is secured at its respective height. Thus, the lifting mechanism does not need to apply a constant pulling force onto the lifting shoe. For a manual lifting mechanism, the worker just needs to apply a force for moving the lifting shoe upwards. For keeping the lifting shoe at its height, no force is needed. By these means, the operation of the assembly aid is easier and less power consuming for the worker. Preferably, the locking mechanism comprises a release mechanism for the worker to unlock the locking mechanism again. This has the advantage that in a simple and inexpensive way, the secure and ergonomic handling of the assembly aid is further improved.

It is preferred that a release device for the locking mechanism is arranged at the actuator. Preferably, the release device is arranged at the foot pedal. The release device can be configured, e.g., as a release button, a release lever, a release plate, a release pin, a release rocker or the like. The release device can be integrated into the foot pedals, e.g., for being activated by a specific action the foot onto the foot pedal, like pushing downwards with a predetermined load, pushing upwards, or the like. With a release device at the foot pedal, the worker can easily release the locking mechanism, e.g., when the fixation bolt is fixed and the next fixation bolt has to be brought into its fixation position. This has the advantage that in a simple and inexpensive way, the secure and ergonomic handling of the assembly aid is further improved.

According to a preferred embodiment of the invention, the lifting shoe comprises a form fit section for engaging the bolt head for preventing a rotation of the bolt head about a longitudinal axis of the fixation bolt. Preferably, the form fit section is configured according to a wrench for the respective fixation bolt size. Further preferred, the form fit section is configured such that the bolt head can be aligned with the form fit section by moving a part of the lifting shoe under the bolt head. Preferably, the form fit section comprises an inclined opening on a horizontal plane for improved engagement with the bolt head. In a final relative position of the lifting shoe and the bolt head, the form fit section encompasses the bolt head from two opposite sides, thus preventing a rotation of the fixation bolt about its longitudinal axis. By these means, the worker does not need a second wrench for holding the bolt head when tightening the fixation nut at the fixation bolt. This has the advantage that in a simple and inexpensive way, the secure and ergonomic handling of the assembly aid is further improved.

According to a second aspect of the invention, the object is achieved by a method for assembling two tower segments of a wind turbine tower. The method comprises:
- stacking the two tower segments in a way that fixation holes of the tower segments are aligned in pairs,
- arranging a plurality of fixation bolts for fixing the two tower segments together at a lower tower segment of the stacked tower segments in a way that the fixation bolts are aligned with the pairs of fixation holes,
- securing the plurality of fixation bolts from falling down by a horizontal support device,
- arranging an assembly aid according to one of the previous claims aside a first fixation bolt of the plurality of fixation bolts,
- engaging a bolt head of the first fixation bolt by the lifting shoe of the assembly aid,
- lifting the first fixation bolt until a threaded portion of the first fixation bolt protrudes out of a fixation hole of the upper tower segment of the stacked tower segments by the lifting shoe,
- arranging and fixing a fixation nut at the first fixation bolt, and
- removing the assembly aid from the first fixation bolt.

At first, the two tower segments are stacked coaxially on top of each other in a way that the adjacent fixation holes of the tower segments are arranged in line. In this state, the fixation bolt can be inserted through a pair of adjacent fixation holes.

Moreover, the plurality of fixation bolts for fixing the two tower segments together at a lower tower segment of the stacked tower segments are arranged in a way that the fixation bolts are aligned with the pairs of fixation holes. To prevent the fixation bolts from falling down, the plurality of fixation bolts is secured to the lower tower segment by the horizontal support device. Preferably, the providing and securing of the fixation bolts is done before the tower segments are stacked. Preferably, the fixation bolts are provided such that a threaded portion of the fixation bolts is located inside the fixation holes of the lower tower segment. Preferably, the fixation bolts are provided such that the end portions of the fixation bolts, opposite to the bolt heads, do not protrude out of the fixation holes of the lower tower segment. Thus, when the two tower segments are stacked, the threaded end portions do not protrude into the fixation holes of the upper tower segment.

Furthermore, the assembly aid according to the invention is arranged aside a first fixation bolt of the plurality of fixation bolts. In this state, a tip of the lifting shoe is pointing at a gap between a side of the bolt head and the horizontal support device. In this state, the lifting shoe is moved in a horizontal direction, e.g., together with the whole assembly aid, in a way that the bolt head of the first fixation bolt is engaged by the lifting shoe. Thus, the lifting shoe is moved between the horizontal support device and the bolt head.

When the bolt head is supported by the lifting shoe, the lifting mechanism of the assembly aid is activated and the lifting shoe is moved in a vertical upward direction, thereby lifting the fixation bolt. By these means, the threaded end portion of the fixation bolt moves into the fixation hole of the upper tower segment until the threaded end portion protrudes from the fixation hole. Preferably, a washer is arranged about the threaded end portion. Then, a fixation nut is arranged onto the threaded end portion and is tightened. Finally, the assembly aid is removed from the first fixation bolt. The assembly aid can then be arranged at a second fixation bolt for repeating the last method steps until all fixation bolts are assembled.

The method according to the invention has all the advantages that have already been described for an assembly aid according to the first aspect of the invention. Accordingly, the method according to the invention has the advantage over conventional methods that in a simple and inexpensive way, the fixation bold is moved from a preassembly position, in which the fixation bolt is disengaged from the fixation hole of the upper tower segment, into an assembly position, in which a threaded end portion of the fixation bolt protrudes out of the fixation hole of the upper tower segment for engaging a respective washer and fixation nut with the assembly aid. Thus, the worker does not have to lift and hold the fixation bolt directly and the risk for injuries to the worker is reduced.

Further advantages, features and details of the invention unfold from the following description, in which by reference to drawings working examples of the present invention are described in detail. Thereby, the features from the claims as well as the features mentioned in the description can be essential for the invention as taken alone or in an arbitrary combination. In the drawings:
Figure 1 shows a schematic perspective view of an assembly aid according to a preferred embodiment of the invention,
Figure 2 shows a schematic detail view of a first state during the execution of a method according to a preferred embodiment of the invention,
Figure 3 shows a schematic detail view of a second state during the execution of a method according to the preferred embodiment of the invention,
Figure 4 shows another schematic detail view of the second state during the execution of a method according to the preferred embodiment of the invention,
Figure 5 shows another schematic detail view of the second state during the execution of a method according to the preferred embodiment of the invention,
Figure 6 shows a schematic detail view of a third state during the execution of a method according to the preferred embodiment of the invention,
Figure 7 shows a schematic side view of a fourth state during the execution of a method according to the preferred embodiment of the invention,
Figure 8 shows a schematic detail view of a fifth state during the execution of a method according to the preferred embodiment of the invention,
Figure 9 shows a schematic perspective view of a sixth state during the execution of a method according to the preferred embodiment of the invention,
Figure 10 shows another schematic detail view of the sixth state during the execution of a method according to the preferred embodiment of the invention, and
Figure 11 shows a schematic flow chart of a method according to the preferred embodiment of the invention.

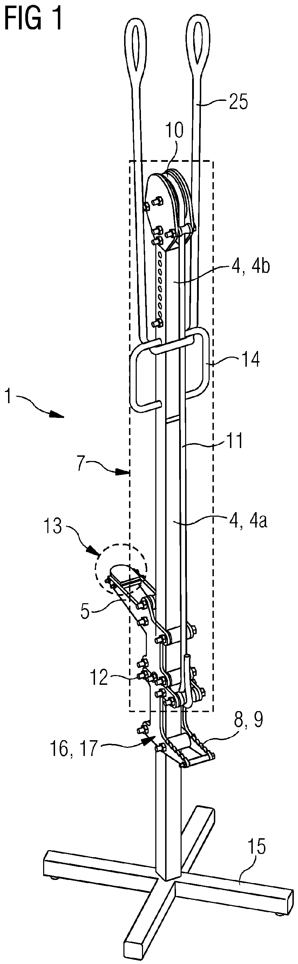

Elements with the same function and effectiveness are denoted each in figures 1 to 11 with the same reference numbers.

In Fig. 1, an assembly aid 1 according to a preferred embodiment of the invention is shown in a schematic perspective view. The assembly aid 1 comprises a mast 4 with a lower mast main section 4a and an upper telescopic end section 4b. At a top end of the telescopic end section 4b, a pulley 10 of a lifting mechanism 7 is arranged. At a low end of the mast main section 4a, a stand 15 with four bars is arranged.

At an upper section of the main mast section 4a, which is adjacent to the telescopic end section 4b, a handle 14 for being held by an assembly worker is provided. Thus, the assembly worker can better move the assembly aid 1 into a desired position and securely keep the assembly aid 1 in place. Moreover, in this example, a sling 25 is wound around the handle 14 for handling the assembly aid 1 with a crane.

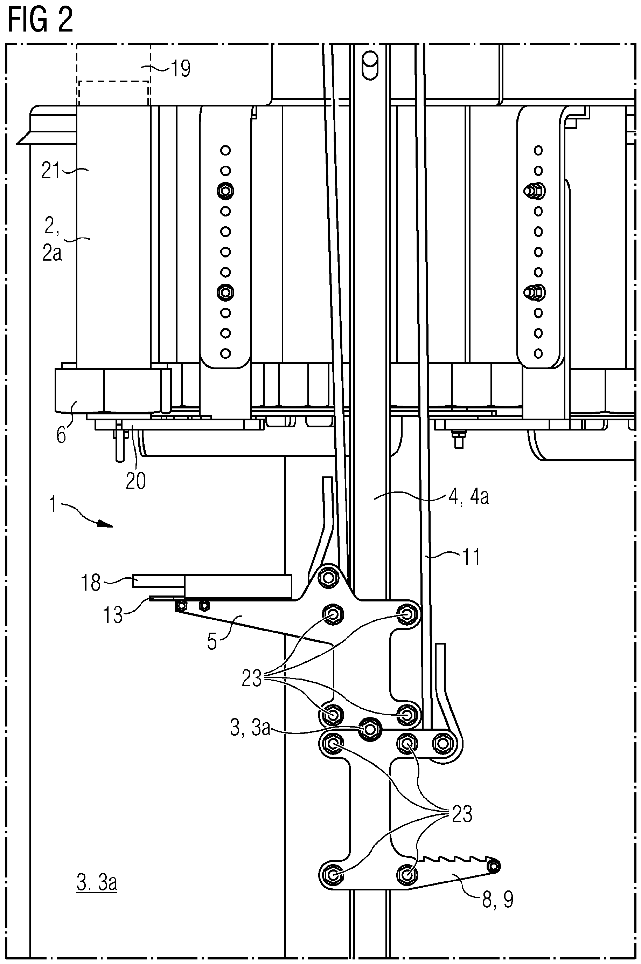

The assembly aid 1 further comprises a lifting shoe 5 with an engagement section 13 for engaging a bolt head 6 (cf. Fig. 2) of a fixation bolt 2 (cf. Fig. 2). The lifting shoe 5 encompasses the mast main section 4a and is linearly guided at the mast main section 4a.

A first end of a flexible traction device 11 of the lifting mechanism 7 is attached to the lifting shoe 5. The flexible traction device 11 is looped around the pulley 10 by 180°. A second end of the flexible traction device 11 is attached to an actuator 8 of the assembly aid 1. The actuator 8 is configured as a foot pedal 9. The foot pedal 9 encompasses the mast main section 4a and is linearly guided at the mast main section 4a. Moreover, the foot pedal 9 is arranged below the lifting shoe 5. By pushing the foot pedal 9 downwards, the flexible traction device 11 is tensioned and the lifting shoe 5 is pulled upwards.

Moreover, a stop element 12 is provided at the mast main section 4a below the lifting shoe 5 and the foot pedal 9. The stop element 12 prevents the lifting shoe 5 from going below the stop element 12 and prevents the foot pedal 9 from going above the stop element 12. Preferably, the lifting shoe 5 side of the lifting mechanism 7 is slightly heavier than the side of the foot pedal 9. Thus, in the shown idle state, the lifting shoe 5 and the foot pedal 9 rest against a stop element 12. In another configuration of the assembly aid 1, either the lifting shoe 5 or the foot pedal 9 rests against the stop element 12 in the idle state.

In this preferred embodiment of the invention, the assembly aid 1 further comprises an optional locking mechanism 16 inside the foot pedal 9. The locking mechanism 16 is configured for locking the foot pedal 9 in a vertical direction against moving upwards, wherein a downward movement is still allowed. Thus, the locking mechanism 16 prevents the lifting shoe 5 from moving downwards. For releasing the locking action of the locking mechanism 16, a release device 17 is integrated into the foot pedal 9. By activating the release device 17, the locking mechanism 16 can be unlocked and the upward movement of the foot pedal 9 and, therefore, the downward movement of the lifting shoe 5 is allowed again.

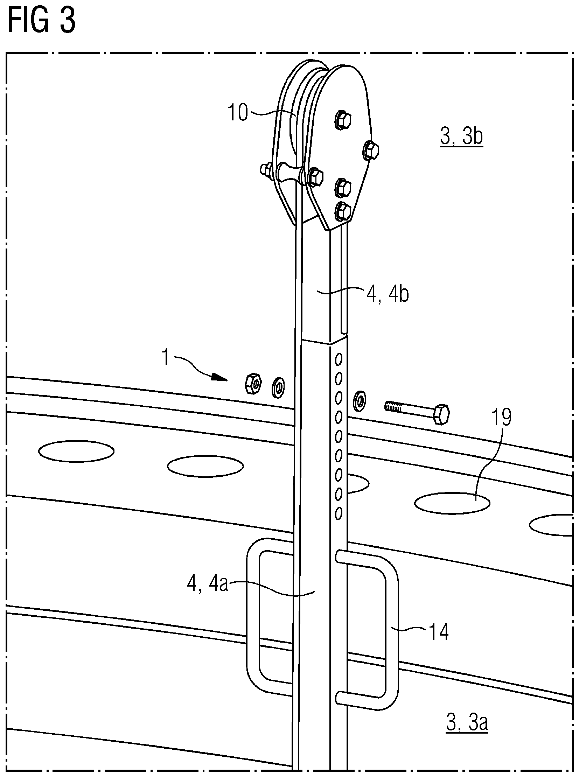

In Fig. 2, a first state during the execution of a method according to a preferred embodiment of the invention is shown in a schematic detail view. In this first state, a lower part of an assembly aid 1 according to the invention is arranged inside a lower tower segment 3a and a not shown upper part of the assembly aid 1 protrudes into a not shown upper tower segment 3b (cf. Fig. 3). The tower segments 3 are piled up in a way that fixation holes 19 of the tower segments 3 are aligned. The lifting shoe 5 and the foot pedal 9 are linearly guided at the mast main section 4a by four bearings 23.

In this example the assembly aid 1 comprises an optional form fit section 18 at the lifting shoe 5 above the engagement section 13. The form fit section 18 has a wrench size corresponding to the size of the bolt head 5. Thus, in an engaged state, a rotation of the fixation bolt 2 can be prevented.

In this first state, the bolt heads 6 of the fixation bolts 2 rest on a horizontal support device 20. The lifting shoe 5 of the assembly aid 5 is arranged considerably below the horizontal support device 20.

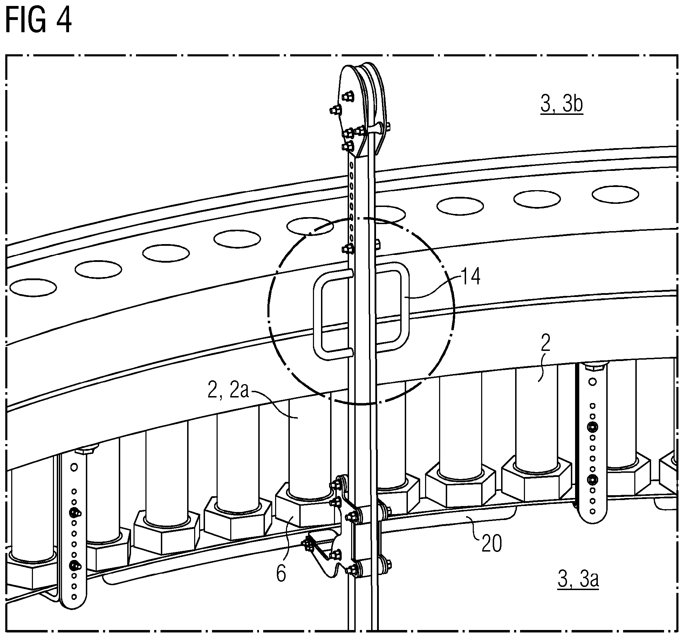

As can be seen in Fig. 3, the telescopic end section 4b of the mast 4 is unsecured in order to move the telescopic end section 4b upwards. By this movement, the foot pedal 9 still rests against the stop element 12, the pulley 10 rotates and the lifting shoe 5 is moved upwards. Preferably, this adjustment procedure is performed until the lifting shoe 5 reaches the position as shown in Fig. 4 at the second state during the execution of the method according to the preferred embodiment of the invention.

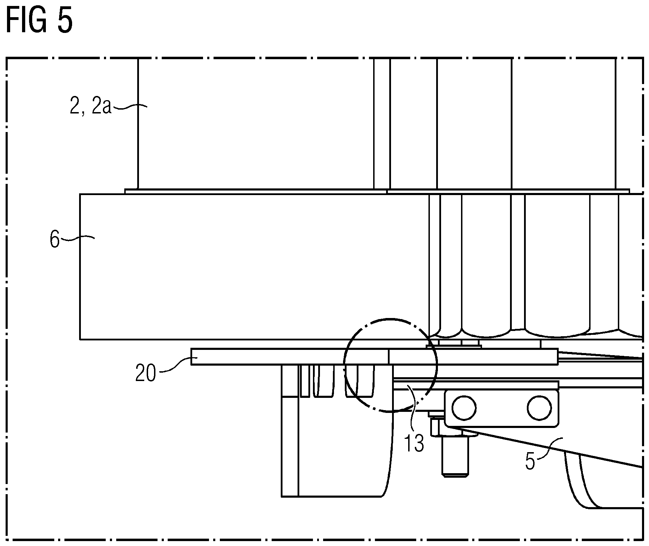

In Figs. 4 and 5, the lifting shoe 5 is right below the bolt head 6 of the first fixation bolt 2a and the horizontal support device 20. Moreover, with respect to the horizontal direction, the engagement section 13 of the lifting shoe 5 is arranged right aside the horizontal support device 20. Consequently, an upward movement of the lifting shoe 5 for engaging the bolt head 6 is not blocked by the horizontal support device 20. In this second state, the worker can hold the assembly aid 1 at the handle 14 and start pushing the foot pedal 9 in a downward direction.

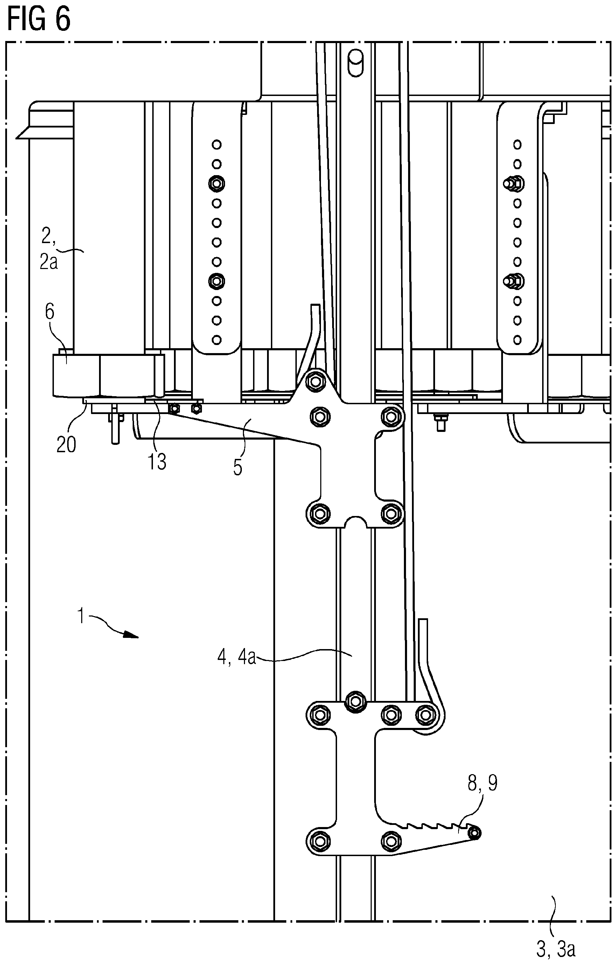

In Fig. 6, the third state during the execution of the method according to the preferred embodiment of the invention is shown. In the third state, the engagement section 13 is next to the horizontal support device 20 and about to engage with the bolt head 6 of the first fixation bolt 2a.

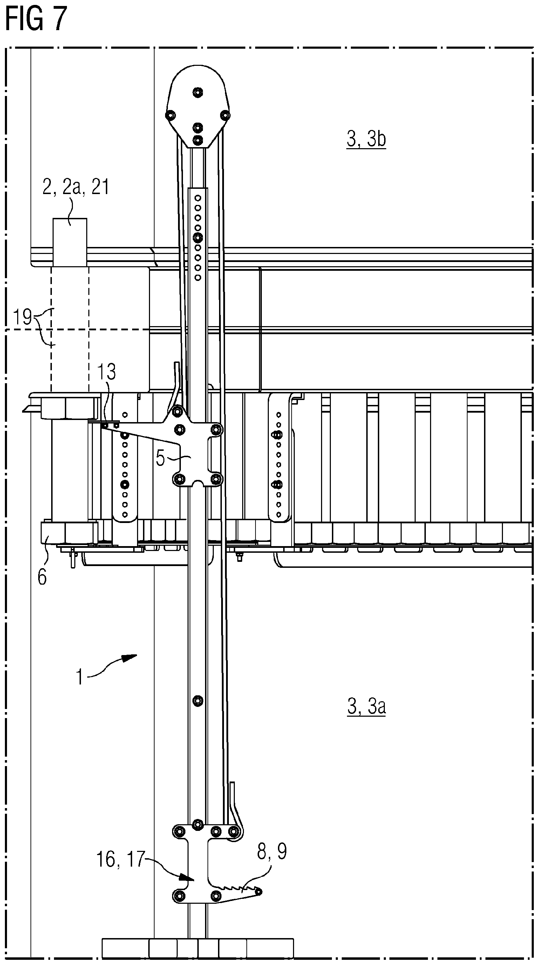

Fig. 7 shows the fourth state during the execution of a method according to the preferred embodiment of the invention in a schematic side view. In the fourth state, the engagement section 13 is engaged with the bolt head 6. The first fixation bolt 2a is lifted upwards by the lifting shoe 5 in a way that the bolt head 6 contacts the lower tower segment 2a and a threaded portion 21 of the first fixation bolt 2a protrudes upwards from the fixation hole 19 of the upper tower segment 3b. This position can be secured by the optional locking mechanism 16.

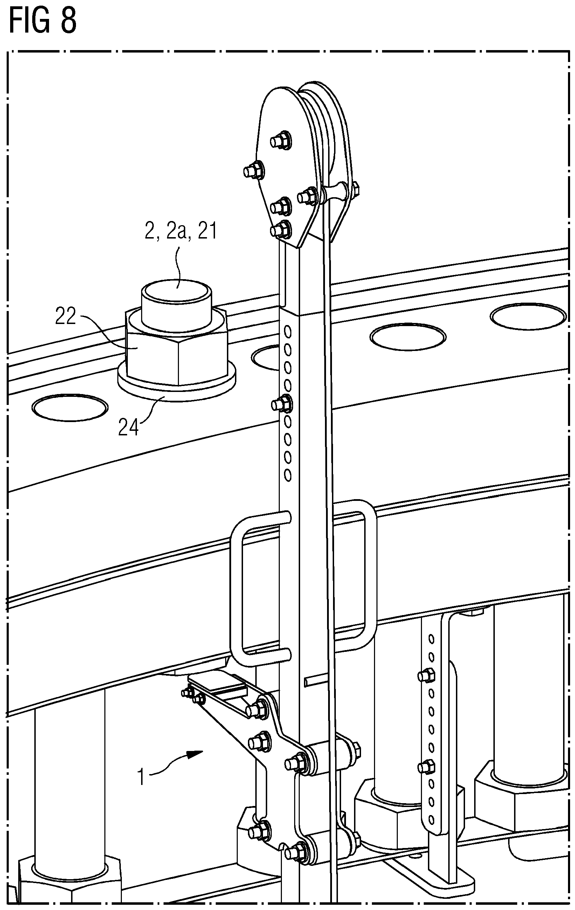

In Fig. 8, the fifth state during the execution of a method according to the preferred embodiment of the invention is shown in a schematic side view. In the fifth state, a washer 24 and a fixation nut 22 are arranged at the protruding threaded portion 21 of the first fixation bolt 2a. The fixation nut 22 is pre-tightened and can be fully tightened at a later state, e.g., when all other fixation bolts 2 are provided in the same state with a washer 24 and a fixation nut 22. In the fifth state, the support of the assembly aid 1 for the first fixation bolt 2a is not needed anymore.

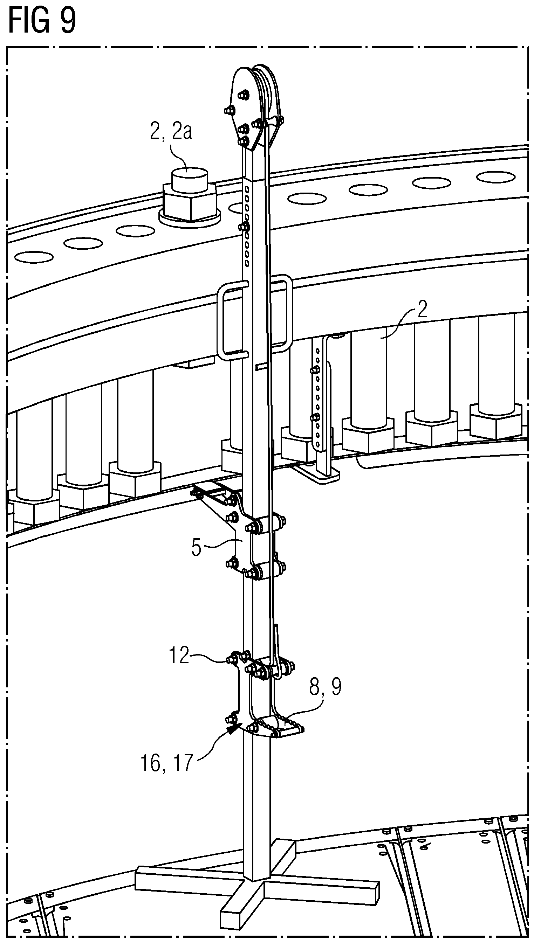

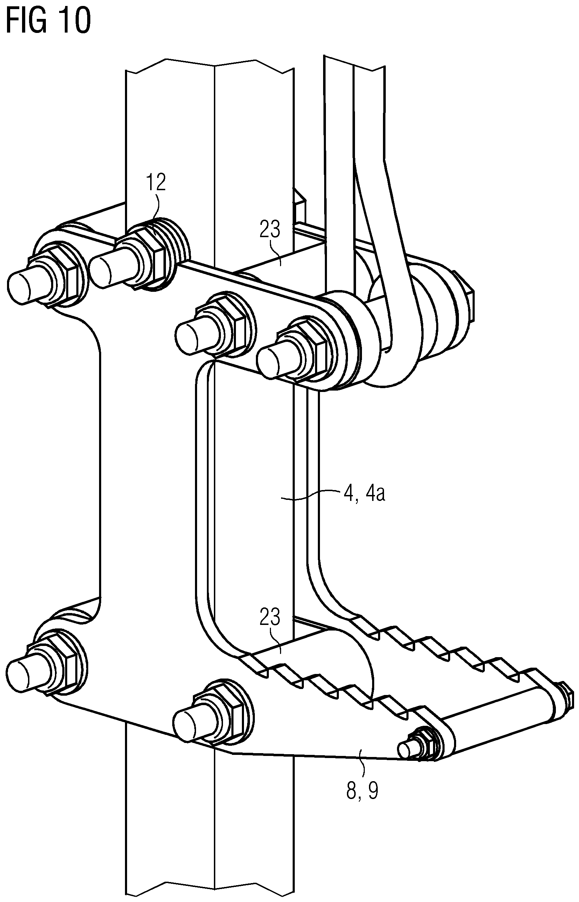

Figs. 9 and 10 show the sixth state during the execution of a method according to the preferred embodiment of the invention in a schematic side view. In the sixth state, the lifting shoe 5 is moved downwards and the foot pedal 9 is moved upwards until the further upward movement of the foot pedal 9 is prevented by the stop element 12. In this sixth state, the assembly aid 1 can be arranged at another fixation bolt 2 for lifting that particular fixation bolt 2 accordingly. In Fig. 10, the linear guidance of the foot pedal 9 at the mast main section 4a by the bearings 23 can be seen clearly. Moreover, the foot pedal 9 comprise a sawtooth upper side for avoiding the workers foot from sliding off the foot pedal 9

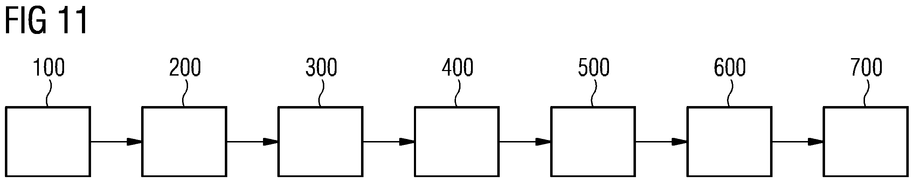

Fig. 11 shows a schematic flow chart of a method according to the preferred embodiment of the invention. In a first method action 100, a lower tower segment 3a is provided with a plurality of fixation bolts 2. Thereby, the threaded portions 21 of the fixation bolts 2 are inserted into fixation holes 19 of the lower tower segment 3a, wherein bolt heads 6 of the fixation bolts are arranged below the fixation holes 19. For preventing fixation bolts 2 from falling down, a horizontal support device 20 is attached to the lower tower segment 3a and the bolt heads 6 rest at the horizontal support device 20.

In a second method action 200, an upper tower segment 3b is stacked on top of the lower tower segment 3b in a way that the fixation holes 19 of the two tower segments 3 are mutually aligned. In a third method action 300, an assembly aid 1 according to the invention is arranged aside a first fixation bolt 2a of the plurality of fixation bolts 2 inside the lower tower segment 3a. The assembly aid 1 is adjusted to a vertical height position of the bolt head 6.

In a fourth method action 400, the assembly aid 1 is moved in a horizontal direction towards the first fixation bolt 2a until the engagement section 13 of the lifting shoe 5 is under the bolt head 6 and aside the horizontal support device 20. In a fifth method action 500, the foot pedal 9 of the assembly aid 1 is pushed downwards. By this action, the lifting shoe 5 is moved upwards by the lifting mechanism 7. Thus, the first fixation bolt 2a is moved upwards by the lifting shoe 5. This is performed until enough length of the threaded portion 21 of the first fixation bolt 2a protrudes out of the fixation hole 19 of the upper tower segment 3a.

In a sixth method action 600, a washer 24 and a fixation nut 22 are arranged at the threaded portion 21 of the first fixation bolt 2a. The fixation nut 22 is pre-tightened for securing the first fixation bolt 2a in its horizontal position. In a seventh method action 700, the assembly aid 1 is removed from the first fixation bolt 2a and moved to another fixation bolt 2 for starting over the method with that particular fixation bolt 2 according to the fourth method action 400 to the seventh method action 700 until all fixation bolts 2 are secured by fixation nuts 22.

## Claims

1. Assembly aid (1) for securely placing a fixation bolt (2) for fixing two tower segments (3) of a tower of a wind turbine, comprising a mast (4) for being arranged vertically and parallel aside the fixation bolt (2), a lifting shoe (5) for being moved under a bolt head (6) of the fixation bolt (2), a lifting mechanism (7) for lifting the lifting shoe (5) with respect to the mast (4) and an actuator (8) for operating the lifting mechanism (7).

2. Assembly aid (1) according to claim 1,
**characterized in**
**that** the lifting shoe (5) is linearly guided at the mast (4).

3. Assembly aid (1) according to claim 1 or 2,
**characterized in**
**that** the actuator (8) is configured as a foot pedal (9), wherein the lifting mechanism (7) comprises a pulley (10) and a flexible traction device (11), wherein the lifting shoe (5) is mechanically coupled to the foot pedal (9) by the flexible traction device (11), wherein the flexible traction device (11) is wound around the pulley (10).

4. Assembly aid (1) according to claim 3,
**characterized in**
**that** foot pedal (9) is linearly guided at the mast (4).

5. Assembly aid (1) according to claim 3 or 4,
**characterized in**
**that** the mast (4) comprises a stop element (12) for limiting a relative movement of the foot pedal (9) in a direction towards the pulley (10) and/or for limiting a relative movement of the lifting shoe (5) in a direction away from the pulley (10).

6. Assembly aid (1) according to any of claims 3 to 5, **characterized in**
**that** the mast (4) comprises a main mast section (4a) and a fixable telescopic end section (4b), wherein the pulley (10) is arranged at the telescopic end section (4b), and wherein the foot pedal (9) is arranged at the main mast section (4a).

7. Assembly aid (1) according to any of the previous claims, **characterized in**
**that** the lifting shoe (5) comprises a horizontally protruding, inclined engagement section (13) for engaging with the bolt head (6).

8. Assembly aid (1) according to any of the previous claims, **characterized in**
**that** the mast (4) comprises a handle (14) for manually supporting the mast (4).

9. Assembly aid (1) according to any of the previous claims, **characterized in**
**that** at a bottom end of the mast (4) a stand (15) is arranged.

10. Assembly aid (1) according to any of the previous claims, **characterized in**
**that** the lifting mechanism (7) comprises a locking mechanism (16) for keeping the lifting shoe (5) at a constant height.

11. Assembly aid (1) according to claim 10,
**characterized in**
**that** a release device (17) for the locking mechanism (16) is arranged at the actuator (8).

12. Assembly aid (1) according to any of the previous claims, **characterized in**
**that** the lifting shoe (5) comprises a form fit section (18) for engaging the bolt head (6) for preventing a rotation of the bolt head (6) about a longitudinal axis of the fixation bolt (2).

13. Method for assembling two tower segments (3) of a wind turbine tower, the method comprising:
- stacking the two tower segments (3) in a way that fixation holes (19) of the tower segments (3) are aligned in pairs,
- arranging a plurality of fixation bolts (2) for fixing the two tower segments (3) together at a lower tower segment (3a) of the stacked tower segments (3) in a way that the fixation bolts (2) are aligned with the pairs of fixation holes (19),
- securing the plurality of fixation bolts (2) from falling down by a horizontal support device (20),
- arranging an assembly aid (1) according to one of the previous claims aside a first fixation bolt (2a) of the plurality of fixation bolts (2),
- engaging a bolt head (6) of the first fixation bolt (2a) by the lifting shoe (5) of the assembly aid (1),
- lifting the first fixation (2a) bolt until a threaded portion (21) of the first fixation bolt (2a) protrudes out of a fixation hole (19) of the upper tower segment (3b) of the stacked tower segments (3) by the lifting shoe (5),
- arranging and fixing a fixation nut (22) at the first fixation bolt (2a), and
- removing the assembly aid (1) from the first fixation bolt (2a).
